# EUROPÄISCHE PATENTSCHRIFT

(11) **EP 3 485 958 B1**
(45) Veröffentlichungstag und Bekanntmachung des Hinweises auf die Patenterteilung: **04.08.2021**
(21) Anmeldenummer: 18213965.9
(22) Anmeldetag: 17.03.2008
(51) Int. Cl.: B01D 46/52, B01D 46/00, B60H 3/06, B01D 46/10

(54) **FILTERELEMENT**
FILTER ELEMENT
ÉLÉMENT FILTRANT

(30) Priorität: 30.03.2007 DE 202007004794 U
(43) Veröffentlichungstag der Anmeldung: 22.05.2019
(62) Teilanmeldung aus: 08102669.2
(73) Patentinhaber: MANN+HUMMEL GmbH, 71636 Ludwigsburg (DE)
(72) Erfinder: Weindl, Markus, 84163 Steinberg (DE); Volkmer, Daniel, 71282 Hemmingen (DE); Grad, Maximilian, 84163 Marklkofen (DE); Brenneis, Fritz, 84163 Marklkofen (DE)
(74) Vertreter: Mann + Hummel Intellectual Property

(56) Entgegenhaltungen:
- EP-A1- 1 134 014
- DE-A1- 10 135 690
- DE-A1- 10 231 696
- DE-A1- 10 241 748
- DE-A1- 10 324 681
- DE-C1- 19 512 678

## Beschreibung

### Technisches Gebiet

Die vorliegende Erfindung betrifft ein Filterelement, insbesondere einen Innenraumfilter zum Filtern von Luft für den Innenraum eines Kraftfahrzeugs.

Ein solches Filterelement dient der Filterung von Fluidströmungen oder gasförmigen Medien, beispielsweise zur Filterung einer Luftströmung, die dem Fahrzeuginnenraum eines Kraftfahrzeugs zugeführt wird. Obwohl auf beliebige Filterelemente anwendbar, werden die vorliegende Erfindung sowie die ihr zugrunde liegende Problematik nachfolgend mit für ein Filterelement zur Filterung von Luft für den Innenraum eines Kraftfahrzeugs beschrieben. Solche Filter werden nachfolgend auch kurz als Kfz-Innenraumluftfilter oder auch Innenraumfilter bzw. Kabinenluftfilter bezeichnet.

Die zunehmende Luftverunreinigung, insbesondere in Großstädten, in Verbindung mit dem Einsatz moderner Klimaanlagen macht es wünschenswert und auch erforderlich, die von außen in den Innenraum eines Kraftfahrzeuges geleitete und aufbereitete bzw. klimatisierte Luft mittels geeigneter Filter zu reinigen. Hierfür kommen beispielsweise Partikelfilter oder Geruchsfilter oder deren Kombination miteinander in Betracht, die in der Luft enthaltene Schwebstoffe, Partikel und Gerüche aus der Umgebungsluft möglichst gut herausfiltern bzw. absorbieren sollen. Solche Filter zur Filterung von Luft für den Innenraum eines Kraftfahrzeuges sind in einer Vielzahl von Ausführungsformen und Varianten allgemein bekannt, so dass auf deren Aufbau und Funktionsweise nachfolgend nur kurz eingegangen wird.

Da die Wirksamkeit von Filtern insbesondere von der Größe der von der Luft durchströmten Oberfläche des Filters abhängig ist, kommen für Kfz-Innenraumluftfilter überwiegend zickzackförmig gefaltete Filtermedien, die auch als plissierte Filtermedien bezeichnet werden, zum Einsatz. Durch die Faltung des verwendeten Filtermediums kann abhängig von der Faltungshöhe, dem Faltungsabstand und dem Grad des Zusammenstauchens dieser ziehharmonikaähnlichen Filterpacks der verschiedenen Faltabschnitte des Filtermediums eine Vergrößerung der von dem Luftstrom durchströmten Filterfläche ermöglicht werden. Um entsprechende Filterelemente mit zickzackförmig gefalteten Filtermedien insbesondere montagetechnisch besser handhaben zu können, sind oft Verstärkungselemente an den Seiten des Filterelementes entlang dem Filterpack aus dem gefalteten Medium vorgesehen. Diese Armierungselemente dienen der seitlichen Fixierung und Stabilisierung des zickzackförmigen Filtermediums und sind mittels eines geeigneten Klebers an den seitlichen Kanten des Faltenpacks angebracht. Das Filterelement mit an den gefalteten Längsseiten streifenförmig angebrachten Armierungen oder Verstärkungen kann auf diese Weise montagetechnisch einfach ohne es zu beschädigen in ein Gehäuse eines Filtermoduls bzw. einer entsprechenden Filteraufnahme, beispielsweise in ein Filtergehäuse oder eine Klimaanlage eines Kraftfahrzeuges, eingefügt werden.

### Stand der Technik

Ähnliche Filterelemente sind z.B. in den deutschen Patentanmeldungen DE 102 31 696 A1 und DE 102 41 748 A1 beschrieben.
Aus der Offenlegungsschrift DE 10324681 A1 ist ein Filterelement mit einem zickzackförmig gefalteten Faltenpack bekannt, welches an mindestens einer Stirnseite mit einem Abschlusselement versehen ist, das eine Versteifung des Faltenpacks und eine Abdichtung des Filterelements gegen eine Wandfläche einer Filteraufnahme bewirkt.

Neben der Notwendigkeit der Stabilität der Filterelemente oder Filtereinsätze müssen diese auch an den Randbereichen zu den entsprechenden Gehäusen dicht abschließen, damit die zu filternde Luft weitestgehend durch das Filtermedium bzw. den Faltenpack strömt und nicht daran vorbeiströmt.

Es ist ferner gewünscht, dass diese Filterelemente neben der einfachen montagetechnischen Handhabbarkeit möglichst auch kostengünstig sein sollten und damit insbesondere herstellungstechnisch möglichst einfach zu produzieren sind. Dabei ist es auch wünschenswert möglichst wenig Filtermaterial, wie z. B. Filtervlies, einzusetzen.

Vor diesem Hintergrund liegt der vorliegenden Erfindung die Aufgabe zugrunde, ein verbessertes Filterelement zu schaffen, dass insbesondere in den Randbereichen eine ausreichende Stabilität sowie einen dichten Abschluss mit einem Filtergehäuse aufweist.

### Offenbarung der Erfindung

Erfindungsgemäß wird zumindest eine der genannten Aufgaben durch ein Filterelement mit den Merkmalen des Patentanspruchs 1 gelöst.

Demgemäß ist ein Filterelement, insbesondere zur Filterung von Luft bzw. zur Absorption von Schadgasen für den Innenraum bzw. die Kabine eines Kraftfahrzeuges vorgesehen, dass einen zickzackförmig gefalteten Faltenpack und mindestens ein zur Faltung des Faltenpacks parallel gefaltetes Abschlusselement aufweist, wobei das Abschlusselement einen ersten im Wesentlichen senkrecht zu einer Durchflussrichtung des Filterelementes angeordneten Schenkel, einen zweiten Schenkel und einen dritten Schenkel aufweist und die Schenkel durch Faltkanten des Abschlusselementes begrenzt sind.

Gemäß der Erfindung wird eine seitliche Stabilität beispielsweise der Kopfseite des Filterelementes durch die zwei Faltkanten bzw. Faltungen des Abschlusselementes erzielt, wobei zusätzlich eine besondere Dichtigkeit durch die in der Regel abstehenden zweiten und/oder dritten Schenkel vorliegt. Der erste und der zweite Schenkel bilden vorzugsweise im Wesentlichen einen rechten Winkel miteinander. In diesem Fall kann die Faltkante zwischen dem ersten und zweiten Schenkel gleichzeitig den seitlichen Abschluss des Faltenpacks bilden, wobei z. B. der dritte Schenkel zur Randabdichtung seitlich von dem Filterelement absteht.

Es ist ferner ein Seitenband an dem Filterelement vorgesehen, welches einteilig auf mehrere quer geschnittene Falten des Faltenpacks angebracht ist. Während das Abschlusselement eine Seite des Filterelementes abschließt, die im Wesentlichen parallel zu den Faltungen des Faltenpacks verläuft, begrenzt das Seitenband Seiten des Filterelementes, die in einem nicht verschwindenden Winkel zu den Faltungen des Faltenpacks verlaufen. Denkbar sind z. B. quadratische, rechteckige oder polygonale Grundrisse des Filterelementes, wobei unter Grundriss eine Fläche senkrecht zur Durchflussrichtung des zu filternden Mediums verstanden wird. Ein Durchströmen von zu filternder Luft kann beispielsweise senkrecht zu den Faltungen des Faltenpacks und in einem spitzen Winkel zu den Faltungsabschnitten des Faltenpacks erfolgen, wenn der Filter senkrecht zu der Strömung angeordnet ist. Grundsätzlich kann die zu filternde Luft die Faltungen des Faltenpacks aber auch unter einem anderen Winkel bzw. anderen Winkeln durchströmen, je nachdem wie der Filter in der Strömung angeordnet ist. Das erfindungsgemäße Filterelement legt dabei prinzipiell keine Vorzugsrichtung für die Durchflussrichtung fest.

Vorzugsweise ist dann das Seitenband aus einem beispielsweise gleich dicken oder dickeren Material als das Abschlusselement gefertigt. In einer Ausführungsform liegt beispielsweise der erste Schenkel des Abschlusselementes auf einer Kante des Seitenbandes auf. In diesem Fall bilden das Seitenband und der erste Schenkel des Abschlusselementes einen stabilen Rahmen um den Faltenpack des Filterelementes.

In einer weiteren Ausführungsform liegt der erste Schenkel des Abschlusselementes auf einer Faltkante des Faltenpacks auf. Dann verleiht der erste Schenkel des Abschlusselementes, der z. B. auf der Faltkante verklebt sein kann, mit seiner Faltung, die den Übergang zum zweiten Abschlusselement darstellt, eine erhöhte Stabilität.

In einer alternativen Ausführungsform des Filterelementes ist ein Faltenendabschnitt des Faltenpacks mit dem zweiten Schenkel des Abschlusselementes verklebt. In diesem Fall steht dann der dritte Schenkel des Abschlusselementes seitlich von dem Filterelement ab, und der erste Schenkel liegt im Wesentlichen parallel zu dem Querschnitt, also senkrecht zu der Durchflussrichtung des zu reinigenden Mediums durch das Filterelement bzw. den Faltenpack.

Denkbar ist auch, dass ein Faltenendabschnitt des Faltenpacks mit dem zweiten Schenkel des Abschlusselementes einen nicht verschwindenden Winkel einschließt, d.h. einen Winkel ungleich 0° ist. Eine Endkante des Faltenendabschnittes kann z. B. in die Faltung zwischen dem ersten Schenkel und dem zweiten Schenkel des Abschlusselementes eingeklebt werden, wodurch eine besonders stabile Faltung erfolgt, die ferner durch die Faltkante zwischen dem dritten und zweiten Schenkel zusätzliche Stabilität erfährt.

In noch einer alternativen Ausführungsform des Filterelementes ist ein verkürzter Faltenendabschnitt auf den zweiten Schenkel des Abschlusselementes geklebt. In diesem Fall kann z. B. eine letzte Faltung des Faltenpacks in die Faltinnenkante der Faltung zwischen dem ersten und zweiten Schenkel eingepasst sein.

In einer bevorzugten Ausführungsform des Filterelementes besteht das Filterelement ausschließlich aus dem Faltenpack, zwei Seitenbändern und zwei Abschlusselementen, die geeignet miteinander verbunden beispielsweise verklebt sind. Diese bevorzugte Ausführungsform weist eine ausreichende Stabilität auf und erlaubt mit geringstem Materialaufwand ein Filterelement aufzubauen.

In weiteren möglichen Ausführungsformen ist z. B. mindestens ein weiterer an den dritten Schenkel angrenzender Schenkel des Abschlusselementes vorgesehen, das Abschlusselement kann einstückig ausgeführt sein, wobei z. B. die Schenkel durch geschlitzte Knicke des Abschlusselementmaterials gebildet sind. In bevorzugten Ausführungsformen entspricht die Breite des zweiten Schenkels der Höhe des Filterelementes. In einer weiteren Ausführungsform kann die Summe aus der Breite des zweiten Schenkels und der Breite des dritten Schenkels der Höhe des Filterelementes entsprechen oder vorzugsweise größer als diese sein.

Weitere vorteilhafte Ausgestaltungen und Weiterbildungen sind Gegenstand der Unteransprüche sowie der im Folgenden beschriebenen Ausführungsbeispiele.

### Kurze Beschreibung der Zeichnungen

Die Erfindung wird nachfolgend anhand der in den Figuren der Zeichnung angegebenen Ausführungsbeispiele näher erläutert. Dabei zeigen:
Fig. 1 eine perspektivische Ansicht eines nicht erfindungsgemäßen Filterelements;
Fig. 2 eine perspektivische Ansicht eines zweiten Ausführungsbeispiels eines erfindungsgemäßen Filterelements;
Fig. 3 - 10 Detailansichten von Faltungsquerschnitten von Ausführungsformen des Abschlusselementes.

In den Figuren der Zeichnung sind gleiche oder funktionsgleiche Elemente und Merkmale - sofern nichts Anderes angegeben ist - mit denselben Bezugszeichen versehen.

### Ausführungsform(en) der Erfindung

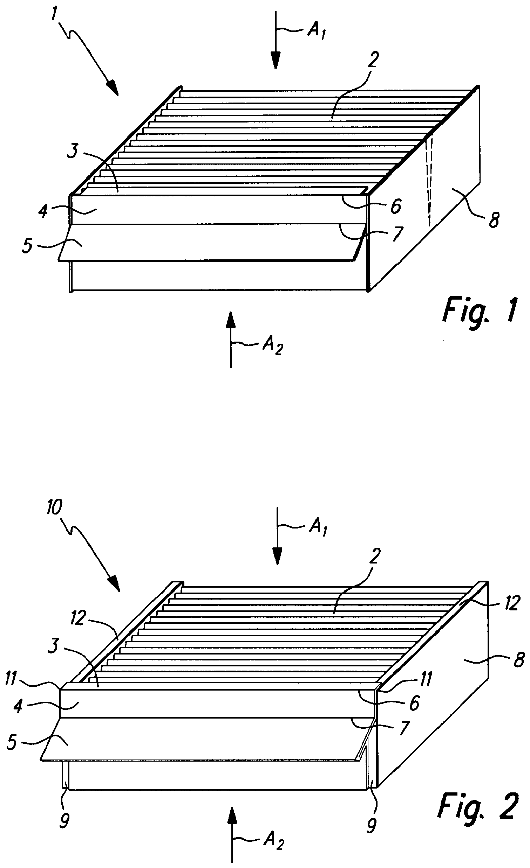

In der Fig. 1 ist eine perspektivische Darstellung eines nicht erfindungsgemäßen Filterelements dargestellt. Das Filterelement 1 hat hier beispielhaft einen rechteckigen Grundriss. Der Faltenpack 2 besteht aus einem zickzackförmig gefalteten Filtermedium, wie einem Filtervlies, Papier aus Zellstoff, das für ein fluides oder gasförmiges Medium durchlässig ist und z. B. auch mit Aktivkohle belegt sein kann. Als Materialdicken kommen Dicken von 0,5 - 2 mm bevorzugt in Frage. In bestimmten Fällen und für besondere Einsatzbereiche sind jedoch auch abweichende Materialdicken denkbar. Es ist auch möglich, ein Polyestermaterial als Filtervlies zu verwenden.

An den Seiten des Filterelementes 1, die parallel zur Faltung des Faltenpacks 2 verlaufen, ist in der Darstellung der Fig. 1 dem Betrachter zugewandten Seite, ein Abschlusselement 3, 4, 5 vorgesehen, das drei Schenkel aufweist, die durch jeweils eine Faltung 6, 7 begrenzt sind. Ein erster Schenkel liegt quer zu einer Durchflussrichtung des zu filternden Mediums, wie beispielsweise der Luft, die hier durch einen Pfeil A1 bzw. A2 angedeutet ist. In der Darstellung der Fig. 1 ist eine Durchflussrichtung nach unten A1 oder auch nach oben A2 durch den Faltenpack 2 möglich.

Eine Faltkante 6 begrenzt den ersten Schenkel 3 von dem zweiten Schenkel 4 des Abschlusselementes, und eine zweite Faltkante 7 trennt den zweiten Schenkel 4 von dem dritten Schenkel 5. Der dritte Schenkel 5 steht dabei seitlich von dem Filterelement ab und schafft einen engen Randschluss mit einer Gehäusewand im eingebauten Zustand des Filterelementes 1. Dann kann beispielsweise bei einer Durchflussrichtung A2 Luft in diese durch den dritten Schenkel 5 gebildete Seitenlasche einströmen und drückt den dritten Winkel 5 weiter nach außen.

Senkrecht zur Faltung des Faltenpacks begrenzen Seitenbänder 8 das Filterelement 1. Somit wird der Faltenpack, der auch als Ziehharmonikapack oder Faltenbalg bezeichnet werden kann, von einem Rahmen aus den Seitenbändern 8 und einem L-förmigen Winkel aus dem ersten 3 und zweiten Schenkel 4 des Abschlusselementes eingefasst. Bereits die erste Faltkante 6 verleiht diesem Rahmen eine gewisse Stabilität. Durch die zweite Faltkante 7 zwischen dem zweiten 4 und dritten Schenkel 5 wird diese zusätzlich verbessert. Man kann auch von einer Armierung oder Versteifung des Faltenpacks oder Filterelementes durch die Seitenbänder 8 und Abschlusselemente 3, 4, 5 sprechen. Zusätzlich zu dieser besonders stabilen Umfassung ergibt sich durch den seitlich abstehenden dritten Schenkel 5 ein besonders guter Randabschluss und damit eine Dichtung im eingebauten Zustand des Filterelements 1.

Mittels des Knickes bzw. der Faltkanten 6, 7, die beispielsweise durch geschlitzte bzw. angeritzte oder eingeprägte Knicke in dem Material des Abschlusselementes ausgeführt sein können, kann die Breite des ersten Schenkels 3 besonders gering gewählt werden, was zu einem verbesserten Durchströmungsquerschnitt des Filterelementes führt. Üblicherweise müssen mehrere Faltkanten des Faltenpacks mit einem darauf aufgeklebten Schenkel überdeckt werden, um eine ausreichende Stabilität hervorzurufen. Gemäß der Erfindung wird jedoch die Dichtwirkung einer durch den dritten Schenkel 5 gebildeten Seitenlasche mit den stabilisierenden Eigenschaften der Faltungen 6, 7 kombiniert, um ein besonders kostengünstig herzustellendes Filterelement 1 auszubilden.

Das Filterelement 1 hat somit einen besonders niedrigen Materialaufwand und ist einfach herzustellen, da es in dem quaderförmigen Beispiel der Fig. 1 nur aus zwei Seitenbändern 8, dem Faltenpack 2, sowie zwei Abschlusselementen 3, 4, 5 besteht. Die Verbindungen zwischen diesen Elementen können durch eine geeignete Verklebung erfolgen. Dabei kann der Klebstoff im ausgehärteten Zustand dem Vliesmaterial zusätzliche Stabilität verleihen.

In Fig. 2 ist eine perspektivische Ansicht eines zweiten Ausführungsbeispiels eines erfindungsgemäßen Filterelementes dargestellt. Das zweite Ausführungsbeispiel 10 weist im Wesentlichen dieselben Elemente wie das in Fig. 1 Gezeigte auf.

In dem Filterelement 10 der Fig. 2 sind die Seitenbänder 8 aus einem gleich dicken oder dickeren Material als die Abschlusselemente 3, 4, 5 und das gefaltete Material des Faltenpacks 2 gewählt. Ein jeweiliges Seitenband 8 weist somit eine Kante 9, 12 auf, auf die an den Ecken 11 des Filterelementes 10 das Abschlusselement aufgeklebt werden kann. Somit liegt der erste Schenkel 3 auf der oberen Kante 12 des Seitenbandes 8 auf und ist dort verklebt. Der zweite Schenkel 4 ist an seinen Endseiten auf die dem Betrachter zugewandte Kante 9 des Seitenelementes 8 aufgeklebt. In dieser Ausführungsform des Filterelementes 10 wird an den Ecken 11 eine besondere Stabilität durch die Verklebung und die Faltkanten 6, 7 erzielt.

Im Folgenden sind mögliche Ausgestaltungen der Abschlussbereiche des erfindungsgemäßen Filterelementes im Querschnitt näher erläutert. Dabei zeigen die folgenden Figuren Schnitte senkrecht zu den Faltungen des Faltenpacks.

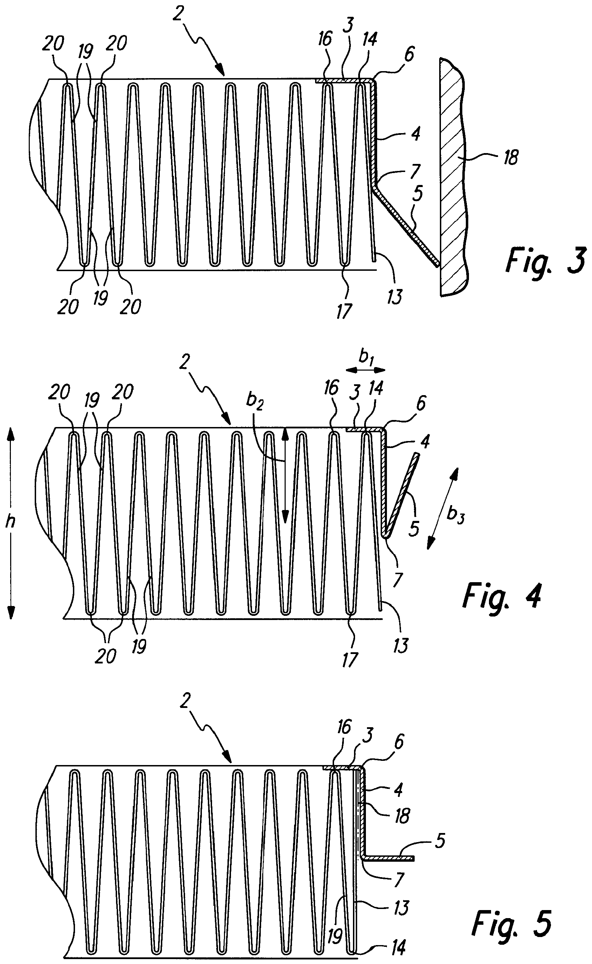

In Fig. 3 ist der Faltenpack 2 schematisch dargestellt. Der Faltenpack 2 wird durch beispielhaft mit 19 und 20 bezeichneten Faltenabschnitte 19 und Biegeoder Faltkanten 20 gebildet. Der Faltenbalg schließt einerseits mit einer Schnittfläche durch den Faltenpack ab und andererseits mit einem Faltenendabschnitt 13, der an der Endfalte 14 des Faltenpacks 2 anschließt. Auf die Schnittfläche kann z. B. ein Seitenband, wie in Fig. 1 und 2 dargestellt, aufgeklebt werden.

In Fig. 3 ist der erste Schenkel 3 des Abschlusselementes auf zwei Faltkanten 14, 16 am Rande des Faltenpacks 2 aufgelegt. An den Auflagepunkten kann z. B. eine Verklebung erfolgen. Ferner verläuft der zweite Schenkel 4 durch einen Knick oder eine Biegefalte 6 ausgehend von dem ersten Schenkel 3 im Wesentlichen in einem rechten Winkel zu dem ersten Schenkel 3.

Daran schließt sich über die Falte oder Biegekante 7 der dritte Schenkel 5 des Abschlusselementes ein. Es ist ferner ein Teil des jeweiligen Gehäuses 18, in das das Filterelement eingebaut werden kann, dargestellt. Der dritte Schenkel 5 steht seitlich von dem Filterelement ab und stößt gegen das Filtergehäuse 18. Somit erfolgt durch den dritten Schenkel 5 eine Abdichtung zwischen dem Filterelement und dem Gehäuse 18. Ferner ist der dargestellte Randbereich des Filterelementes einerseits durch den auf die Faltungen 14, 16 des Faltenpacks 2 angeordneten ersten Schenkel sowie die beiden z. B. geschlitzten Knicke 6, 7 des Abschlusselementes äußerst stabil.

In Fig. 3 reicht der dritte Schenkel in seiner Breite über das Faltenpack hinaus, d. h. in an dem Faltenendabschnitt 13 angeschmiegtem Zustand des zweiten und dritten Schenkels 4, 5 ragt der dritte Schenkel 5 in der Darstellung der Fig. 3 nach unten hinaus.

In Fig. 4 ist ein zweites Beispiel für die Ausführung eines Abschlusselementes gemäß der Erfindung dargestellt. Der erste Schenkel 3 ist hier auf nur eine Endfaltung 14 des Faltenpacks 2 von der Oberseite angebracht. Der Faltenendabschnitt 13 liegt damit praktisch frei, erhält jedoch Stabilität durch die in Fig. 4 nicht dargestellte Verklebung mit dem Seitenband, wie es aus Fig. 1 und 2 entnehmbar ist.

In Fig. 4 ist eine Situation dargestellt, in der der zweite und dritte Schenkel 4, 5 des Abschlusselementes einen spitzen Winkel miteinander bilden. Damit wird eine erhöhte Kraft durch die Rückstellkräfte der Faltung 7 in horizontaler Richtung also senkrecht von den Faltungen des Faltenpacks 2 weg in Richtung auf eine mögliche Gehäusewand erzielt.

Die Größenverhältnisse von der Höhe des Filterelementes h, die durch die Breite der Faltenabschnitte 19 und die Knickwinkel der Faltungen 20 gegeben ist, mit der Breite b1, b2, b3 der Schenkel 3, 4, 5 des Abschlusselementes sind in dem Beispiel der Fig. 4 derart gewählt, dass die Summe aus der Breite b2 des zweiten Schenkels 4 mit der Breite b3 des dritten Schenkels 5 der Höhe h des Filterelements entsprechend. Das Abschlusselement bedingt hier nur einen minimalen Materialaufwand, da durch die beiden Faltungen 6, 7 bzw. Faltkanten eine hohe Stabilität erreicht wird und nur eine Endfalte 14 des Faltenpacks überdeckt werden muss.

In Fig. 5 ist eine weitere mögliche Realisierung eines erfindungsgemäßen Filterelementes dargestellt. Dabei ist der Filterendabschnitt 13 über eine Verklebung 18 mit dem zweiten Schenkel 4 verbunden, und der erste Schenkel 3 liegt auf der letzten oberseitigen Faltkante 16 des Faltenpacks 2 auf. Der Faltenendabschnitt 13 und der zweiten Schenkel 4 verlaufen aufeinander angeschmiegt parallel und bilden mit dem ersten Schenkel 3 einen rechten Winkel. Es wird durch die Verklebung 18 eine zusätzliche Steifigkeit des in Fig. 5 dargestellten Randbereiches erreicht, die durch die Faltungen 6, 7 ferner verstärkt wird. Durch die Schenkel 3 und 4 und den Faltenendabschnitt 13 sowie dem vorletzten Faltenabschnitt 19 wird eine stabile 3-seitige Struktur geschaffen.

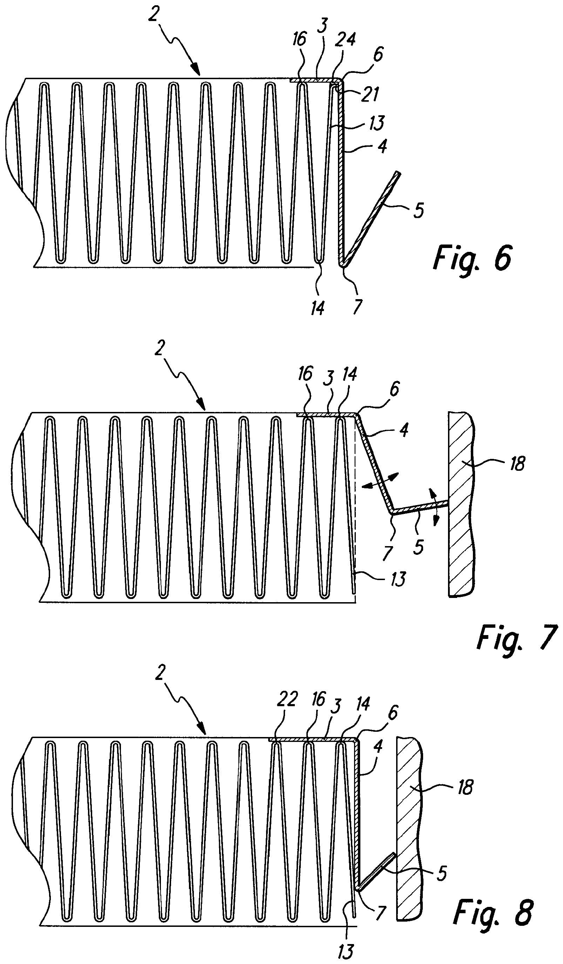

In Fig. 6 ist eine alternative Ausführungsform dargestellt. Hier ist eine Endkante 21 des Faltenendabschnittes 13 in den durch den ersten und zweiten Schenkel 3, 4 gebildeten Winkel über eine Klebung 24 eingeklebt. Der erste Schenkel 3 hat als Auflagefläche diese Endkante 21 bzw. die Verklebung 24 und die vorletzte Faltkante 16 des Faltenpacks. Der zweite Schenkel 4 verläuft über die gesamte Höhe des Faltenpacks 2 bzw. des Filterelementes. Der dritte Schenkel 5 steht seitlich von dem Filterelement ab, wobei die Faltkante 7 den unteren Abschluss des zweiten Schenkels und damit des Filterelementes bildet. Die Kanten 14, 16 und 6 bzw. 24 bilden ein stabiles Profil.

In Fig. 7 ist eine weitere abgewandelte Ausführungsform des erfindungsgemäßen Filterelementes dargestellt. Der erste Schenkel 3 ist auf zwei Faltkanten 14, 16 des Faltenpacks 2 angeordnet z. B. verklebt und sowohl der zweite Schenkel 4 wie auch der dritte Schenkel 5 stehen seitlich von dem Filterelement ab. Die Beweglichkeit der zweiten und dritten Schenkel 4, 5 über die Faltungen 6, 7 ist durch Pfeile dargestellt. Eine Abdichtung in Richtung einer Filtergehäuseseite 18 geschieht dabei durch ein Zusammenstauchen der Knicke 6, 7 des Abschlusselementes.

Fig. 8 zeigt eine weitere mögliche Ausführungsform für das Abschlusselement. Dabei überdeckt der erste Schenkel 3 drei Faltungen bzw. liegt auf drei Faltkanten 14, 16, 22 des Faltenpacks 2 auf. Ferner bildet der Faltenendabschnitt 13 und der zweite Schenkel 4 einen sehr spitzen Winkel miteinander. Der dritte Schenkel 5 ist nach oben gebogen, wodurch durch den Knick 7 zwischen dem zweiten und dritten Schenkel 4, 5 eine besonders hohe Spannung erzeugt wird, die in einer Rückstellkraft in Richtung auf die Gehäusewand 18 führt. Durch das Überdecken bzw. Aufliegen auf mehreren Faltkanten 14, 16, 22 des Faltenpacks 2 wird die Stabilität in den Randbereichen des Filterelementes erhöht, welches zudem über die Faltkanten 6, 7 weitere Steifigkeit erfährt.

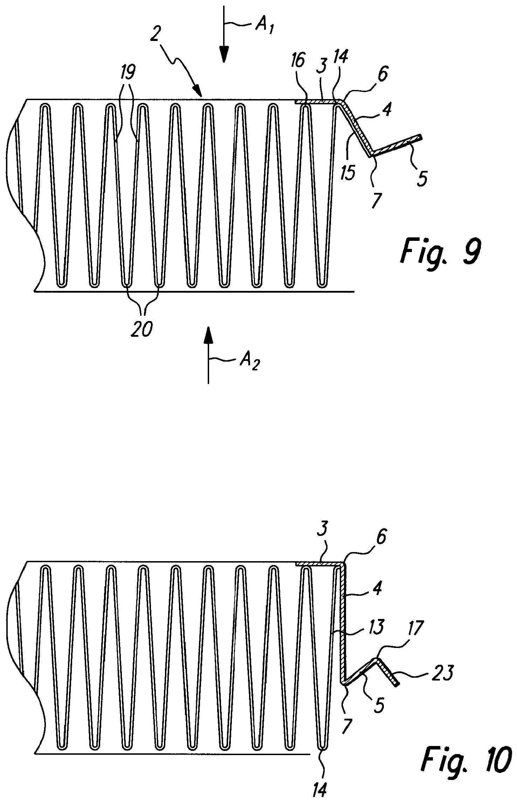

In Fig. 9 ist noch ein Ausführungsbeispiel dargestellt, wobei der Faltenendabschnitt 15 gegenüber den übrigen Faltabschnitten 19 des Faltenpacks 2 verkürzt ist. Der erste Schenkel 3 liegt auf zwei Faltkanten 14, 16 des Faltenpacks 2 auf, und die Endfaltung 14 des Faltenpacks 2, welche in den verkürzten Faltenendabschnitt 15 übergeht, liegt in der Faltkante 6 zwischen dem ersten und zweiten Schenkel 3, 4. Der zweite Schenkel 4 und der verkürzte Faltenendabschnitt 15 sind beispielsweise miteinander verklebt und haben dieselbe Breite, so dass mit der Faltkante 7 ein Übergang in den dritten Schenkel 5 erfolgt.

Die Verklebung des verkürzten Faltenendabschnittes 15 mit dem zweiten Schenkel 4 liefert durch den verwendeten Klebstoff weitere Stabilität und Steifigkeit auch hinsichtlich der durch die Faltkanten 6, 7 und 14 erzeugten Rückstellkraft in horizontaler Richtung und daher senkrecht zu einer möglichen Durchflussrichtung A1, A2 der zu filternden Luft oder allgemein des zu filternden Mediums. Die in Fig. 9 dargestellte Ausführungsform ist ebenfalls besonders materialsparend.

Abschließend ist noch eine Weiterbildung des erfindungsgemäßen Filterelementes in Fig. 10 dargestellt. Es umfasst im Wesentlichen dieselben Elemente, wie es in den vorangehenden Fig. 3 - 9 erläutert wurde und ferner einen weiteren Schenkel 23 der über eine Faltkante 17 an den dritten Schenkel 5 anschließt. Durch die Erhöhung der Anzahl der Schenkel insbesondere im Anschluss an den zweiten Schenkel 4 lässt sich eine weitere verbesserte Abdichtung gegenüber einem Gehäuse erzielen, da die weiteren Knicke bzw. Faltungen 7, 17 zusätzliche Rückstellkräfte in horizontaler also senkrechter Richtung zur Durchflussrichtung des zu filternden Mediums erzeugen.

Obwohl die vorliegende Erfindung anhand bevorzugter Ausführungsbeispiele näher erläutert wurde, ist sie nicht darauf beschränkt, sondern vielfältig modifizierbar. Die in den Figuren dargestellten Falt- und Verklebemöglichkeiten sowie Breiten der Schenkel des Abschlusselementes lassen sich in vielfältiger Weise kombinieren und sind nicht auf die explizit dargestellten Formen in den Figuren beschränkt. Ferner lassen sich alle Ränder oder Teile der Umrandung eines entsprechenden Filterpacks mit entsprechenden Abschlusselementen ausstatten.

Die in Fig. 1 und 2 dargestellte Querschnittsform des Filterelementes lässt sich ebenfalls abwandeln, so dass halbkreisförmige oder unregelmäßige Formen je nach Anforderungen durch das Filtergehäuse ermöglicht werden.

## Patentansprüche

1. Filterelement (1, 10), insbesondere zur Filterung von Luft für den Innenraum eines Kraftfahrzeugs, mit einem zickzackförmig gefalteten Faltenpack (2) und mindestens einem zur Faltung des Faltenpacks parallelen gefalteten Abschlusselement, welches einen ersten im Wesentlichen senkrecht zu einer Durchflussrichtung (A₁, A₂) des Filterelementes angeordneten Schenkel (3), einen zweiten Schenkel (4) und einen dritten Schenkel (5) aufweist, wobei die Schenkel (3, 4, 5) durch Faltkanten (6, 7) des Abschlusselementes begrenzt sind, wobei der dritte Schenkel (5) zum Bilden einer Randabdichtung seitlich von dem Filterelement (1, 10) absteht, wobei eine erste Faltung des Abschlusselements die Faltkante (6) zwischen dem ersten Schenkel (3) und den zweiten Schenkel (4) bildet und eine der ersten Faltung entgegengesetzte zweite Faltung des Abschlusselements die Faltkante (7) zwischen dem zweiten Schenkel (4) und dem dritten Schenkel (5) bildet, und wobei das Filterelement (1, 10) ferner ein Seitenband (8) aufweist, welches einteilig auf mehrere quer geschnittene Falten des Faltenpacks (2) angebracht ist, **dadurch gekennzeichnet, dass** der erste Schenkel (3) des Abschlusselements auf einer oberen Kante (12) des Seitenbandes (8) aufliegt und dort mit dem Seitenband (8) verklebt ist, wodurch das Seitenband (8) und der erste Schenkel (3) des Abschlusselements einen stabilen Rahmen um den Faltenpack (2) bilden.

2. Filterelement (1, 10) nach Anspruch 1, **dadurch gekennzeichnet, dass** der erste und der zweite Schenkel (3, 4) im Wesentlichen einen rechten Winkel miteinander bilden.

3. Filterelement (1, 10) nach einem der Ansprüche 1 oder 2, **dadurch gekennzeichnet, dass** der erste Schenkel (3) des Abschlusselements auf einer Faltkante (14, 16) des Faltenpacks (2) aufliegt.

4. Filterelement (1, 10) nach einem der Ansprüche 1 - 3, **dadurch gekennzeichnet, dass** ein Faltenendabschnitt (5) des Faltenpacks (2) mit dem zweiten Schenkel (4) des Abschlusselementes verklebt ist.

5. Filterelement (1, 10) nach einem der Ansprüche 1 - 4, **dadurch gekennzeichnet, dass** ein Faltenendabschnitt (13) des Faltenpacks (2) mit dem zweiten Schenkel (4) des Abschlusselementes einen nicht verschwindenden Winkel einschließt.

6. Filterelement (1, 10) nach einem der Ansprüche 1 - 5, **dadurch gekennzeichnet, dass** ein verkürzter Faltenendabschnitt (15) auf den zweiten Schenkel (4) des Abschlusselementes geklebt ist.

7. Filterelement (1, 10) nach einem der Ansprüche 1 - 6, **dadurch gekennzeichnet, dass** das Filterelement (1, 10) ausschließlich das Faltenpack (2), zwei Seitenbänder (8) und zwei Abschlusselemente (3, 4, 5) aufweist, die miteinander verklebt sind.

8. Filterelement (1, 10) nach einem der Ansprüche 1 - 7, **dadurch gekennzeichnet, dass** das Abschlusselement mindestens einen an den dritten Schenkel (5) angrenzenden weiteren Schenkel (16) aufweist.

9. Filterelement (1, 10) nach einem der Ansprüche 1 - 8, **dadurch gekennzeichnet, dass** das Abschlusselement (3, 4, 5) einstückig ausgeführt ist.

10. Filterelement (1, 10) nach einem der Ansprüche 1 - 9, **dadurch gekennzeichnet, dass** die Schenkel (3, 4, 5, 16) durch geschlitzte Knicke des Abschlusselementmaterials gebildet sind.

11. Filterelement (1, 10) nach einem der Ansprüche 1 - 10, **dadurch gekennzeichnet, dass** die Breite (b₂) des zweiten Schenkels (4) der Höhe (h) des Filterelementes entspricht.

12. Filterelement (1, 10) nach einem der Ansprüche 1 - 11, **dadurch gekennzeichnet, dass** die Summe aus der Breite (b₂) des zweiten Schenkels (4) und der Breite (b₃) des dritten Schenkels (5) der Höhe (h) des Filterelementes (2) entspricht oder größer ist als diese.

## Claims

1. Filter element (1, 10), in particular for filtering air for the passenger compartment of a motor vehicle, having a zigzag-folded pleated pack (2) and at least one parallel folded end element for folding the pleated pack, which end element features a first leg (3) disposed substantially perpendicular to a flow direction (A₁, A₂) of the filter element, a second leg (4) and a third leg (5), wherein the legs (3, 4, 5) are limited by fold edges (6, 7) of the end element, wherein the third leg (5) projects laterally from the filter element (1, 10) for forming an edge seal, wherein a first folding of the end element forms the fold edge (6) between the first leg (3) and the second leg (4), and a second folding of the end element opposing the first folding forms the fold edge (7) between the second leg (4) and the third leg (5), and wherein the filter element (1, 10) furthermore features a lateral strip (8) which is applied in one piece to several transversely cut folds of the pleated pack (2), **characterized in that** the first leg (3) of the end element rests on an upper edge (12) of the lateral strip (8) and glued there to the lateral strip (8) so that the lateral strip (8) and the first leg (3) of the end element form a stable frame around the pleated pack (2).

2. Filter element (1, 10) according to claim 1, **characterized in that** the first and the second leg (3, 4) form substantially a right angle with each other.

3. Filter element (1, 10) according to one of the claims 1 or 2, **characterized in that** the first leg (3) of the end element rests on a fold edge (14, 16) of the pleated pack (2).

4. Filter element (1, 10) according to one of the claims 1 to 3, **characterized in that** a fold end portion (5) of the pleated pack (2) is glued to the second leg (4) of the end element.

5. Filter element (1, 10) according to one of the claims 1 to 4, **characterized in that** a fold end portion (13) of the pleated pack (2) forms a non-vanishing angle with the second leg (4) of the end element.

6. Filter element (1, 10) according to one of the claims 1 to 5, **characterized in that** a shortened fold end portion (15) is glued to the second leg (4) of the end element.

7. Filter element (1, 10) according to one of the claims 1 to 6, **characterized in that** the filter element (1, 10) features exclusively the pleated pack (2), two lateral strips (8) and two end elements (3, 4, 5) which are glued together.

8. Filter element (1, 10) according to one of the claims 1 to 7, **characterized in that** the end element features at least one further leg (16) abutting on the third leg (5).

9. Filter element (1, 10) according to one of the claims 1 to 8, **characterized in that** the end element (3, 4, 5) is made in one piece.

10. Filter element (1, 10) according to one of the claims 1 to 9, **characterized in that** the legs (3, 4, 5, 16) are formed by slotted bends of the end element material.

11. Filter element (1, 10) according to one of the claims 1 to 10, **characterized in that** the width (b₂) of the second leg (4) corresponds to the height (h) of the filter element.

12. Filter element (1, 10) according to one of the claims 1 to 11, **characterized in that** the sum of the width (b₂) of the second leg (4) and the width (b₃) of the third leg (5) is equal to or greater than the height (h) of the filter element (2).

## Revendications

1. Élément filtrant (1, 10), notamment destiné à filtrer l'air pour l'espace intérieur d'un véhicule automobile, ayant un ensemble de plis plié en accordéon (2) et au moins un élément terminal plié parallèlement pour le pliage de l'ensemble de plis, lequel élément terminal présente une première branche (3) disposée sensiblement verticalement par rapport à un sens de flux (A₁, A₂) de l'élément filtrant, une deuxième branche (4) et une troisième branche (5), dans lequel les branches (3, 4, 5) sont limitées par des arêtes de pliage (6, 7) de l'élément terminal, dans lequel la troisième branche (5) fait saillie latéralement de l'élément filtrant (1, 10) pour former une étanchéité périphérique, dans lequel un premier pliage de l'élément terminal forme l'arête de pliage (6) entre la première branche (3) et la deuxième branche (4) et un second pliage de l'élément terminal opposé au premier pliage forme l'arête de pliage (7) entre la deuxième branche (4) et la troisième branche (5), et dans lequel l'élément filtrant (1, 10) présente en outre une bande latérale (8) attachée d'un seul tenant à une pluralité de plis coupés transversalement de l'ensemble de plis (2), **caractérisé en ce que** la première branche (3) de l'élément terminal repose sur un bord supérieur (12) de la bande latérale (8) et y est collée à la bande latérale (8) de sorte que la bande latérale (8) et la première branche (3) de l'élément terminal forment un cadre stable autour de l'ensemble de plis (2).

2. Élément filtrant (1, 10) selon la revendication 1, **caractérisé en ce que** la première et la deuxième branche (3, 4) forment essentiellement un angle droit entre elles.

3. Élément filtrant (1, 10) selon une quelconque des revendications 1 ou 2, **caractérisé en ce que** la première branche (3) de l'élément terminal repose sur une arête de pliage (14, 16) de l'ensemble de plis (2).

4. Élément filtrant (1, 10) selon une quelconque des revendications 1 à 3, **caractérisé en ce qu'**une section terminale de plis (5) de l'ensemble de plis (2) est collée à la deuxième branche (4) de l'élément terminal.

5. Élément filtrant (1, 10) selon une quelconque des revendications 1 à 4, **caractérisé en ce qu'**une section terminale de plis (13) de l'ensemble de plis (2) forme un angle non évanouissant avec la deuxième branche (4) de l'élément terminal.

6. Élément filtrant (1, 10) selon une quelconque des revendications 1 à 5, **caractérisé en ce qu'**une section terminale de plis raccourcie (15) est collée à la deuxième branche (4) de l'élément terminal.

7. Élément filtrant (1, 10) selon une quelconque des revendications 1 à 6, **caractérisé en ce que** l'élément filtrant (1, 10) présente exclusivement l'ensemble de plis (2), deux bandes latérales (8) et deux éléments terminaux (3, 4, 5) qui sont collés les uns aux autres.

8. Élément filtrant (1, 10) selon une quelconque des revendications 1 à 7, **caractérisé en ce que** l'élément terminal présente au moins une autre branche (16) adjacente à la troisième branche (5).

9. Élément filtrant (1, 10) selon une quelconque des revendications 1 à 8, **caractérisé en ce que** l'élément terminal (3, 4, 5) est exécuté d'un seul tenant.

10. Élément filtrant (1, 10) selon une quelconque des revendications 1 à 9, **caractérisé en ce que** les branches (3, 4, 5, 16) sont formées par des coudes fendus du matériau de l'élément terminal.

11. Élément filtrant (1, 10) selon une quelconque des revendications 1 à 10, **caractérisé en ce que** la largeur (b₂) de la deuxième branche (4) correspond à la hauteur (h) de l'élément filtrant.

12. Élément filtrant (1, 10) selon une quelconque des revendications 1 à 11, **caractérisé en ce que** la somme résultant de la largeur (b₂) de la deuxième branche (4) et de la largeur (b₃) de la troisième branche (5) est égale ou supérieure à la hauteur (h) de l'élément filtrant (b₂).
